# FASCICULE DE BREVET EUROPEEN

(11) **EP 3 857 029 B1**
(45) Date de publication et mention de la délivrance du brevet: **09.11.2022**
(21) Numéro de dépôt: 19790658.9
(22) Date de dépôt: 17.09.2019
(51) Int. Cl.: F01D 25/18, F16H 57/04

(54) **RESERVOIR AUXILIAIRE D'HUILE POUR UNE TURBOMACHINE D'AERONEF**
ZUSATZÖLTANK FÜR EINE FLUGGASTURBINE
AUXILIARY OIL TANK FOR AN AIRCRAFT TURBINE ENGINE

(30) Priorité: 24.09.2018 FR 1858629
(43) Date de publication de la demande: 04.08.2021
(73) Titulaire: SAFRAN AIRCRAFT ENGINES, 75015 Paris (FR)
(72) Inventeur: JACQUEMARD, Christophe, Paul, 77550 MOISSY-CRAMAYEL (FR); DESOMBRE, Didier, Gabriel, Bertrand, 77550 MOISSY-CRAMAYEL (FR)
(74) Mandataire: Gevers & Orès
(86) Numéro de dépôt international: PCT/FR2019/052163
(87) Numéro de publication internationale: WO 2020/065179

(56) Documents cités:
- EP-A1- 3 327 260
- EP-A2- 1 925 856
- US-A1- 2010 326 048

## Description

### DOMAINE TECHNIQUE

Le domaine de la présente invention est celui des turbomachines d'aéronef, notamment celui du stockage d'huile de lubrification de ces turbomachines.

### ETAT DE L'ART

Une turbomachine, telle qu'un turboréacteur à double flux d'un aéronef, comprend classiquement une entrée d'air comportant une soufflante carénée dont le flux d'air en sortie se divise en un flux d'air qui pénètre dans la partie moteur et forme un flux chaud (ou flux primaire), et en un flux d'air qui s'écoule autour de la partie moteur et forme un flux froid (ou flux secondaire).

La partie moteur comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine (flux primaire) sont mélangés au flux secondaire. Une turbomachine peut également être du type à « double-corps » ce qui signifie qu'elle comporte deux rotors agencés coaxialement. Un premier corps est appelé corps basse pression et un second corps est appelé corps haute pression. De façon connue, la partie moteur comporte dans ce cas, d'amont en aval, un compresseur basse pression, un compresseur haute pression, la chambre de combustion, une turbine haute pression et une turbine basse pression.

Dans le cas d'une turbomachine à réducteur, l'arbre de turbine entraîne l'arbre de soufflante par l'intermédiaire d'un réducteur de vitesse permettant de réduire la vitesse de rotation de l'arbre de soufflante par rapport à celle de l'arbre de turbine.

Selon le type de réducteur utilisé, planétaire ou épicycloïdal, l'arbre de soufflante va tourner dans le même sens ou dans le sens contraire à l'arbre de turbine. Un réducteur planétaire ou épicycloïdal présente chacun au moins un train épicycloïdal (comprenant au moins un planétaire, un porte-satellites, des satellites et une couronne) agencé selon une configuration définie.

Plus précisément, un réducteur épicycloïdal présente notamment une couronne fixe et un porte-satellites solidaire de l'arbre de soufflante, chaque satellite ayant ainsi un axe de rotation mobile.

L'arbre de turbine, qui est l'arbre de turbine basse pression dans le cas d'une turbomachine à double corps, est en général accouplé à un arbre de compresseur basse pression qui est lui-même accouplé à un arbre d'entrée du réducteur. Cet arbre d'entrée est couplé en rotation avec le planétaire du réducteur afin de l'entraîner en rotation.

L'arbre de soufflante est par exemple guidé en rotation par rapport à une structure fixe via deux paliers distants l'un de l'autre et placés en amont du réducteur de vitesse. L'arbre d'entrée est guidé en rotation par rapport à la structure fixe via un palier placé en aval du réducteur de vitesse.

Le réducteur est logé dans une enceinte annulaire de lubrification et, dans la technique actuelle, son fonctionnement pour assurer la lubrification et le refroidissement de ses pignons et paliers est garanti par un système d'alimentation et un circuit de lubrification principal de la turbomachine, nécessitant que celle-ci fonctionne. Un exemple de réservoir auxiliaire pour la lubrification d'un réducteur est divulgué dans le document EP-1925856.

Cependant, pendant les phases de rotation libre de la soufflante sous l'effet des flux d'air traversant la soufflante (appelé *windmilling*), le moteur ne fonctionne pas et le système d'alimentation et le circuit de lubrification principal n'assure pas la lubrification du réducteur, ce qui peut entrainer le grippage des dentures du réducteur, ou encore la casse de ces dernières.

L'invention a pour but de remédier à ces inconvénients en proposant une solution compatible avec toutes les phases de fonctionnement de la turbomachine, et notamment celles dans lequel le moteur ne fonctionne pas.

### EXPOSE DE L'INVENTION

A cet effet, l'invention concerne un réservoir d'huile auxiliaire pour une turbomachine d'aéronef, comportant une forme générale incurvée dont le rayon de courbure est centré sur un axe destiné à correspondre à un axe de la turbomachine, ce réservoir comportant une paroi cylindrique ou tronconique radialement externe et trois parois cylindriques ou tronconiques radialement internes et agencées en regard de ladite paroi radialement externe, les trois parois radialement internes comportant une paroi médiane et deux parois latérales disposées de chaque côté de la paroi médiane, la paroi médiane ayant un rayon de courbure moyen supérieur aux rayons de courbure moyens desdites parois latérales de façon à ce que le volume interne du réservoir forme sensiblement un U dont les branches sont formées par des portions latérales de volume entre les parois latérales et la paroi radiale externe et dont le fond est formé par une portion médiane de volume entre la paroi médiane et la paroi radiale externe.

Le réservoir selon l'invention présente une forme adaptée lui procurant l'avantage intéressant de pouvoir être monté sur un carter de turbomachine et de pouvoir être utilisé dans tout type de turbomachine, comportant ou non un réducteur, pour la récupération spontanée d'huile de lubrification.

Avantageusement, le réservoir comprend une entrée d'huile située sur la paroi médiane.

Avantageusement, les portions latérales de volume sont reliées à des sorties de gaz.

Avantageusement, le réservoir comprend une sortie d'huile destinée à être reliée par un tuyau à une pompe alimentée par exemple par un moteur électrique.

L'invention concerne encore un carter de turbomachine, comportant deux parois annulaires coaxiales, l'une formant le carter intérieur de la turbomachine s'étendant à l'intérieur de l'autre formant le carter inter-veine de la turbomachine, et reliées ensembles par une rangée annulaire de bras destinés à être balayés par un flux de gaz en fonctionnement, l'un au moins de ces bras étant creux et comportant un premier passage interne de récupération d'huile, caractérisé en ce qu'il comprend un second passage interne de récupération d'huile et d'acheminement de cette huile vers un réservoir auxiliaire comprenant l'une des caractéristiques susmentionnées.

Selon un exemple de réalisation, lesdits passages de récupération d'huile sont formés dans le carter inter-veine et sont formés par deux canaux séparés par une cloison et agencés côte à côte dans un même plan passant par l'axe de révolution du carter intérieur et du carter inter-veine.

Avantageusement, le carter inter-veine comprend deux rebords annulaires radialement externes entre lesquels est monté le réservoir auxiliaire selon l'invention.

Avantageusement, la paroi médiane du réservoir auxiliaire est située au droit dudit bras creux et les parois latérales sont situées au droit d'espaces inter-bras.

Le réservoir et le carter selon l'invention présentent de nombreux avantages. Notamment :
- le positionnement particulier du réservoir dans un espace inter-veine autorise la possibilité d'adaptation du volume interne du réservoir auxiliaire selon l'invention en fonction du besoin, par exemple dépendant de la taille de la turbomachine ;
- de permettre un remplissage spontané du réservoir auxiliaire garantissant par exemple une bonne lubrification du réducteur ;
- d'être facilement et rapidement monté et fixé sur le carter de la turbomachine et déposé de cette dernière.

L'invention concerne également une turbomachine d'aéronef caractérisée en ce qu'elle comprend un carter selon l'invention, dans lequel l'axe de centrage du rayon de courbure du réservoir auxiliaire 20 correspond à l'axe longitudinal de la turbomachine.

Avantageusement, la turbomachine selon l'invention comprend un réducteur, un réservoir principal d'huile de lubrification et un circuit principal de lubrification, un réservoir auxiliaire d'huile, un circuit de lubrification auxiliaire, le réservoir auxiliaire étant relié au réducteur par l'intermédiaire du second passage interne de récupération d'huile, le réservoir principal et le circuit de lubrification principal étant configurés pour lubrifier le réducteur lorsque la turbomachine est active, et le réservoir auxiliaire et le circuit de lubrification auxiliaire étant configurés pour lubrifier le réducteur lorsque la turbomachine n'est pas active.

L'invention concerne encore un procédé de lubrification d'un réducteur d'une turbomachine d'aéronef selon l'invention, comprenant une étape d'activation de la pompe de façon à ce que de l'huile arrive depuis le réservoir auxiliaire jusqu'au réducteur dès qu'une phase de rotation libre de la soufflante est détectée.

Ainsi, le réducteur est toujours lubrifié, même pendant les phases de rotation libre de la soufflante, ce qui assure une durée de vie plus importante des engrenages du réducteur.

### DESCRIPTION DES FIGURES

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
la figure 1 est une vue en coupe à caractère schématique d'une turbomachine ;
la figure 2 est une vue en perspective d'un réservoir auxiliaire selon l'invention ;

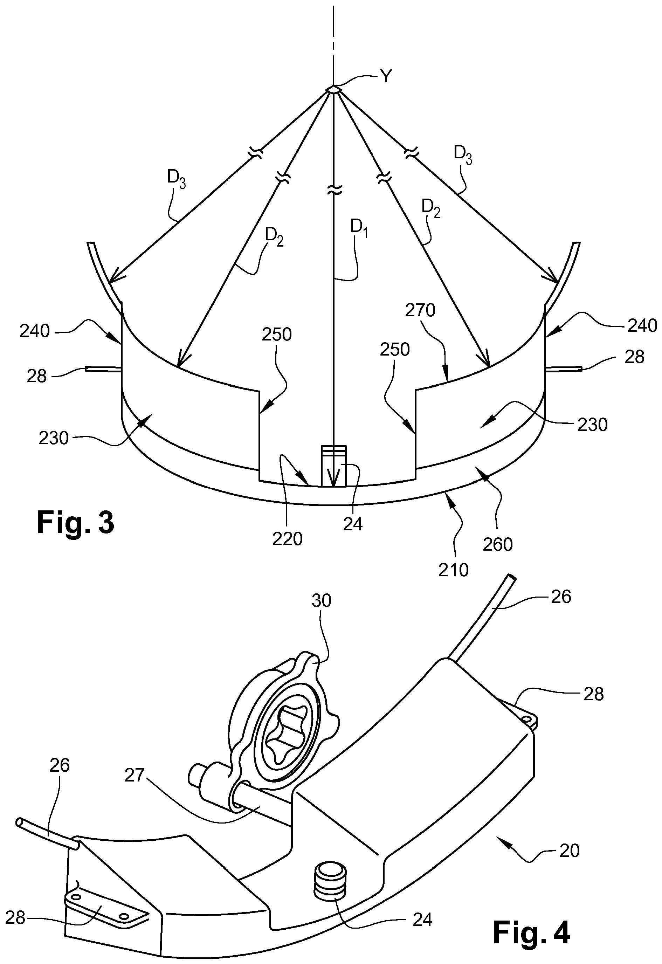

la figure 3 est une vue de face du réservoir auxiliaire selon l'invention ;
la figure 4 est une vue en perspective du réservoir auxiliaire selon l'invention muni d'une pompe de lubrification ;
la figure 5 montre une vue en perspective de la face arrière d'un carter de turbomachine selon l'invention ;
la figure 6 est une vue de détail en perspective du carter de turbomachine selon l'invention ;
la figure 7 est une vue en perspective de la face avant du carter selon l'invention équipé d'un réservoir auxiliaire selon l'invention ;
la figure 8 est une vue de détail du réservoir auxiliaire selon l'invention monté sur le carter de turbomachine selon l'invention ;
la figure 9 est une vue en coupe selon l'axe A-A de la figure 7 ;
la figure 10 est une vue analogue à la figure 8 illustrant le parcours de l'huile de lubrification dans un carter de turbomachine selon l'invention ;
la figure 11 est une vue de détail en perspective illustrant la pompe de lubrification montée sur le carter de turbomachine selon l'invention.

### DESCRIPTION DETAILLEE

Dans le présent exposé, les termes « amont », « aval » sont utilisés en référence au sens d'écoulement des gaz dans une turbomachine d'aéronef. Les termes « interne », « externe », « radiale », « axiale » sont définis par rapport à un axe des centres de courbure des parois constituant le réservoir auxiliaire selon l'invention.

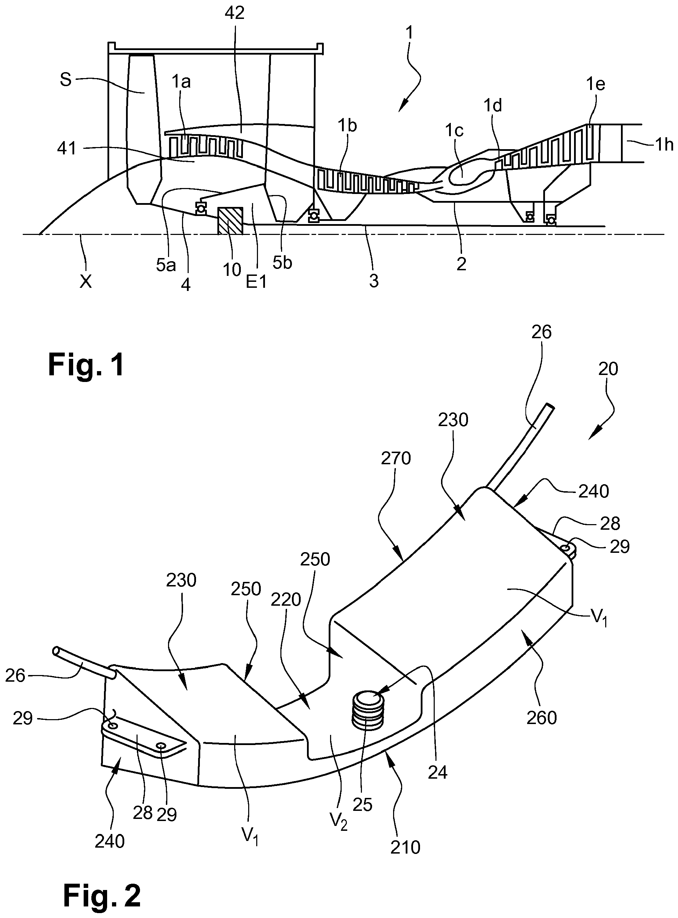

La figure 1 montre une turbomachine 1 qui comporte, de manière classique centrés sur un axe longitudinal X, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est couplé à l'arbre BP 3 au moyen d'un réducteur 10 à train épicycloïdal représenté ici schématiquement.

Le réducteur 10 est positionné dans la partie avant de la turbomachine. Une structure fixe comportant schématiquement, ici, une partie amont 5a et une partie aval 5b est agencée de manière à former une enceinte E1 entourant le réducteur 10. Cette enceinte E1 est ici fermée en amont par des joints au niveau d'un palier permettant la traversée de l'arbre de soufflante 4, et en aval par des joints au niveau de la traversée de l'arbre BP 3.

Un tel réducteur 10 doit être lubrifié afin de maintenir ses engrenages dans un bon état de fonctionnement et garantir une durée de vie du réducteur 10 acceptable pour une turbomachine d'aéronef. Cela implique donc de pouvoir lubrifier le réducteur 10 même lorsque la soufflante est en rotation libre, par exemple sous l'effet de *windmilling* dû au vent traversant la soufflante.

La présente invention propose donc d'ajouter, sur une turbomachine d'aéronef, par exemple à proximité du réducteur 10, un réservoir d'huile auxiliaire 20 en complément d'un réservoir d'huile principal connu en soi. Ce réservoir auxiliaire pourrait toutefois équiper une turbomachine non équipée d'un réducteur.

En référence à la figure 2, le réservoir auxiliaire 20 présente une forme générale incurvée ou circonférentielle dont le rayon de courbure est centré sur un axe Y destiné à être confondu avec l'axe longitudinal X de la turbomachine 1. Ce réservoir comporte une paroi cylindrique ou tronconique radialement externe 210 et trois parois cylindriques ou tronconiques radialement internes 220, 230.

Les parois radialement internes 220, 230 sont agencées en regard de la paroi radialement externe 210. Les trois parois radialement internes comportent une paroi médiane 220 et deux parois latérales 230 disposées de chaque côté de la paroi médiane 220. La paroi médiane 220 présente un rayon de courbure moyen D1 supérieur aux rayons de courbure moyens D2 des parois latérales 230.

Le réservoir auxiliaire 20 comprend des parois aux extrémités circonférentielles 240. Chacune de ces parois aux extrémités circonférentielles 240 relie une paroi radiale interne latérale 230 à la paroi radiale externe 210 et constitue les bords latéraux du réservoir 20.

Le réservoir auxiliaire 20 comporte encore des parois radiales intermédiaires 250. Chacune de ces parois radiales intermédiaires 250 relie une paroi radiale interne latérale 230 à la paroi radiale interne médiane 220.

Le réservoir auxiliaire 20 comprend encore des parois 260, 270 aux extrémités axiales.

Le réservoir 20 est exécuté en toute matière présentant la robustesse nécessaire, il peut être souple ou rigide.

De la sorte, le volume interne du réservoir auxiliaire 20 forme sensiblement un U. Chaque branche du U est formée par une portion latérale de volume V1 entre l'une des parois latérales 230, la paroi radiale externe 210, l'une des parois aux extrémités circonférentielles 240 et l'une des parois radiales intermédiaires 250 prolongée fictivement jusqu'à la paroi radiale externe 210. Le fond du U est formé par une portion médiane de volume V2 entre la paroi médiane 220, la paroi radiale externe 210 et un prolongement fictif des parois radiales intermédiaires 250 jusqu'à la paroi radiale externe 210.

Le réservoir auxiliaire 20 comprend une entrée d'huile située sur la paroi médiane 220. Comme illustré, mais de manière nullement limitative, l'entrée d'huile comporte un goulot 24 sensiblement cylindrique en saillie sur la paroi médiane 220 et comportant une gorge annulaire externe 25 de réception d'un joint d'étanchéité, tel qu'un joint torique (non représenté).

De manière avantageuse, les portions latérales de volume V1 sont reliées à des sorties de gaz. Selon un exemple de réalisation, les sorties de gaz sont formées par des conduites d'évents 26 de forme générale incurvée et ayant par exemple un rayon de courbure moyen D3 identique à celui des parois latérales 230. Ces conduites d'évents 26 communiquent avec l'enceinte E1 pour assurer la chasse de gaz lors du remplissage en huile du réservoir auxiliaire 20.

Pour permettre la fixation du réservoir auxiliaire 20 sur un carter de turbomachine 1 d'aéronef, le réservoir auxiliaire 20 comprend encore des pattes de fixation 28 comportant des orifices 29 de passage de vis. Ces pattes 28, par exemple au nombre de deux, sont disposées respectivement sur des parois aux extrémités circonférentielles 240 et s'étendent circonférentiellement.

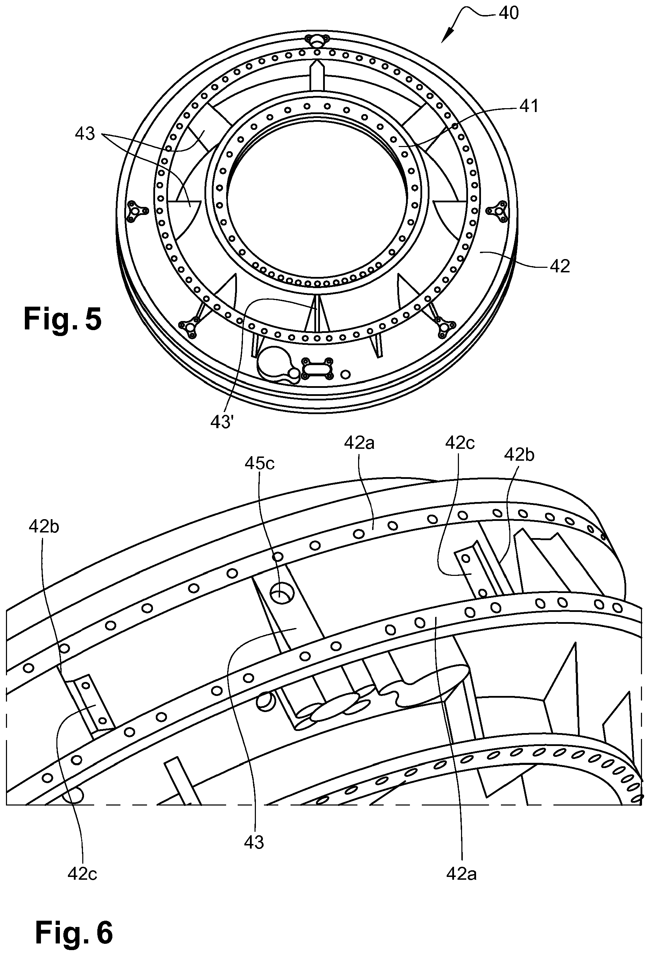

La figure 5 illustre un carter 40 de turbomachine 1. Ce carter 40 comporte deux parois annulaires coaxiales 41, 42 s'étendant l'une 41 à l'intérieur de l'autre 42, et reliées ensemble par une rangée annulaire de bras 43 destinés à être balayés par un flux de gaz en fonctionnement. L'un 43' au moins de ces bras 43 est creux et comprend des passages de fluide 44 et 45 définis ci-après. La paroi annulaire interne 41 définit le carter intérieur 41 de la turbomachine 1 et la paroi annulaire externe 42 définit le carter inter-veine 42 de la turbomachine 1. Le carter intérieur 41 et le carter inter-veine 42 définissent l'ensemble de carter amont de la turbomachine 1 encore appelé carter 40 dans le présent exposé.

Comme représenté notamment en figure 6, le carter inter-veine 42 du carter 40 comprend deux rebords annulaires 42a radialement externes reliés par des nervures de rigidification 42b.

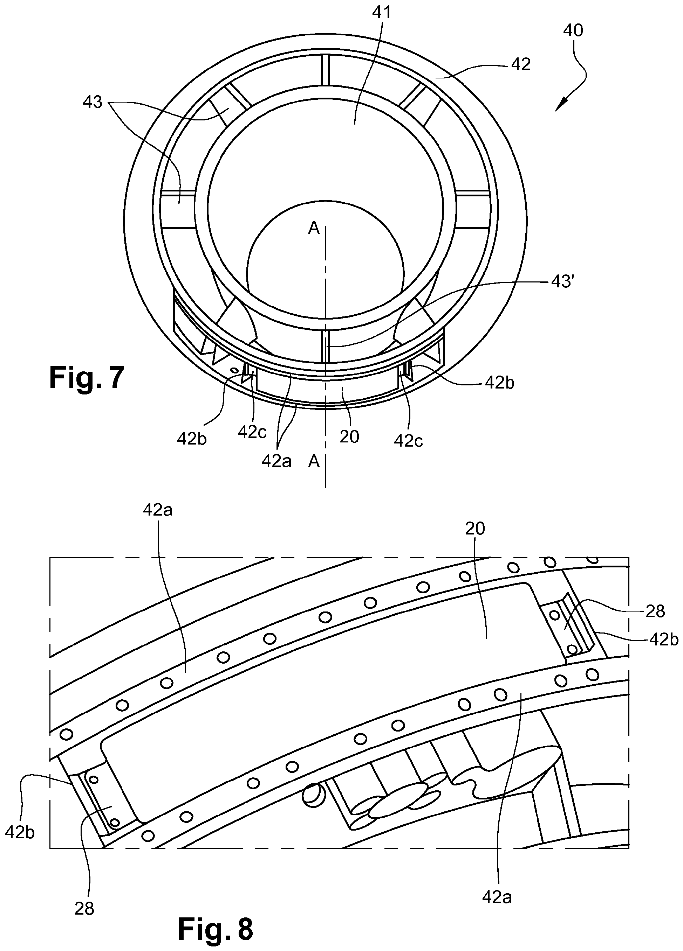

Le réservoir auxiliaire 20 est monté entre les deux rebords annulaires 42a radialement externes et entre deux nervures de rigidification 42b adjacentes (voir figures 7 et 8). La paroi médiane 220 du réservoir auxiliaire 20 est alors située au droit du bras creux 43' et les parois latérales 230 sont situées au droit d'espaces inter-bras.

En effet, le réservoir auxiliaire 20 selon l'invention reprend en partie la forme du carter inter-veine 42 de la turbomachine 1 et présente donc une forme adaptée permettant son intégration dans le carter inter-veine 42 de la turbomachine 1.

Les nervures 42b sont munies de pattes de fixation 42c s'étendant circonférentiellement sur leurs faces destinées à être agencées en regard des parois 240 du réservoir auxiliaire 20, lorsque ce dernier est monté sur le carter 40. Le réservoir 20 est alors solidarisé au carter 40 par exemple par vissage des pattes de fixation 28 du réservoir auxiliaire 20 aux pattes de fixation 42c du carter 40. Selon un autre exemple de réalisation non représenté, le réservoir auxiliaire 20 est intégré au carter 40.

Avantageusement, comme illustré à la figure 7, le réservoir est positionné angulairement à 6 heures, en référence à un cadran horaire, (c'est-à-dire en position basse) lorsque le carter 40 est monté sur une turbomachine d'aéronef.

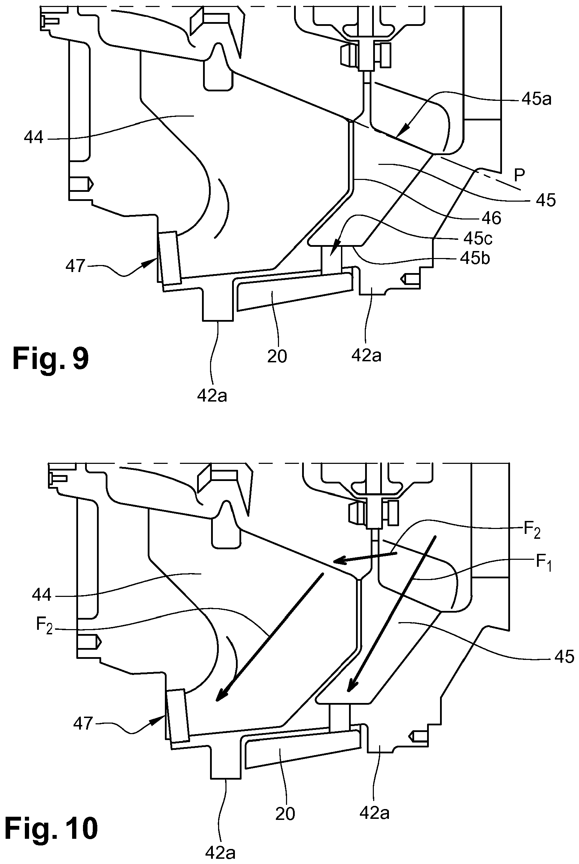

Le bras creux 43' assure la récupération globale par gravité d'huile de lubrification du réducteur 10 de l'enceinte E1. En référence aux figures 9 et 10, le bras creux 43' comporte un premier passage interne 44 de récupération d'huile et un second passage interne 45 de récupération d'huile. Les premier et second passages 44, 45 de récupération d'huile sont formés dans le carter inter-veine 42 du carter 40. Ils sont par exemple formés par deux canaux séparés par une cloison 46 et agencés côte à côte dans un même plan passant par l'axe de révolution du carter intérieur 41 et du carter inter-veine 42.

Le premier passage 44 est, de manière connue en soi, en lien avec un réservoir principal d'huile (non représenté) et assure le passage d'huile vers différents organes de la turbomachine tels que, par exemple, les roulements des lignes des arbes de turbine, de compresseur, de soufflante, ...

Le réservoir d'huile principal est notamment en lien avec un système de lubrification principal qui assure la lubrification du réducteur 10 lorsque la turbomachine est active.

Le second passage 45 de récupération d'huile présente une forme non rectiligne, par exemple en V. Il comprend une ouverture 45a et un fond 45b comportant un orifice 45c d'engagement du goulot 24 du réservoir 20.

Le second passage interne 45 de récupération d'huile est configuré pour permettre l'acheminement de l'huile récupérée de l'enceinte E1 vers le réservoir auxiliaire 20.

Plus précisément, après lubrification du réducteur 10 par exemple, en fonctionnement normal de la turbomachine dans lequel le moteur fonctionne, l'huile de lubrification est évacuée dans le bras creux 43', elle s'écoule alors dans le passage 45 comme illustré à la figure 10 par la flèche F1. De la sorte, le réservoir est alimenté en continu et de manière spontanée. Lorsque le réservoir auxiliaire 20 est rempli, le passage 45 se remplit d'huile de lubrification qui se dirige alors, par débordement, dans le passage 44 afin d'être évacuée par l'orifice 47 vers une récupération générale d'huile comme illustré par les flèches F2 et le réservoir d'huile principal connu en soi (non représenté).

De manière avantageuse, l'ouverture 45a du second passage 45 est opposée au réservoir auxiliaire 20. Elle s'étend dans un plan P qui est destiné à être incliné d'amont en aval vers le bas lorsque la turbomachine 1 est sensiblement à l'horizontale.

Le réservoir 20 et le carter 40 ainsi configurés, et notamment le passage de récupération 45, permettent de maintenir un niveau d'huile suffisant dans le réservoir auxiliaire 20, ceci même sous l'effet d'une inclinaison négative de la turbomachine 1, ou encore sous les effets de roulis de cette dernière.

Le réservoir auxiliaire 20 est associé à un circuit de lubrification auxiliaire (non représenté). Ainsi, le réservoir auxiliaire 20 associé au circuit de lubrification auxiliaire constituent un ensemble indépendant du circuit de lubrification principal permettent de lubrifier le réducteur 10 lorsque le circuit de lubrification principal n'est pas actif, par exemple lors des phases de fonctionnement particulières de *windmilling* avec la turbomachine éteinte et le circuit de lubrification principal non actif, ne nécessitant donc pas d'activer le circuit de lubrification principal spécifiquement dans ces phases de fonctionnement particulières de la turbomachine.

Le réservoir auxiliaire 20 présente des dimensions telles qu'il renferme un volume d'huile suffisant pour répondre au besoin de lubrification du réducteur 10 selon la turbomachine lors des phases d'utilisation du réservoir auxiliaire 20.

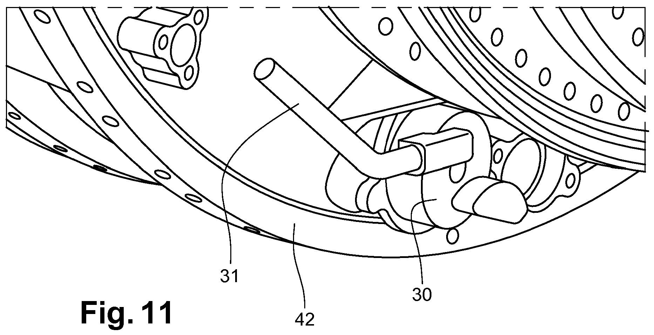

Le réservoir comprend encore une sortie d'huile reliée par un tuyau 27 à une pompe 30 alimentée par exemple par un moteur électrique (non représenté). Comme illustré à la figure 11, la pompe 30 est fixée au carter 40.

La présente invention concerne encore un procédé de lubrification d'un réducteur 10 d'une turbomachine 1 comprenant un carter 40 équipé d'un réservoir auxiliaire 20.

Lorsqu'une phase de rotation libre de la soufflante S est détectée, la pompe 30 est activée par exemple par le moteur électrique. L'huile de lubrification est alors prélevée dans le réservoir auxiliaire 20 par le tuyau de sortie d'huile 27 et est acheminée vers le réducteur 10 ou tout autre organe nécessitant d'être lubrifié comme des paliers par exemple, par un tuyau 31 en sortie de la pompe 30 et via le circuit de lubrification auxiliaire.

Le réservoir auxiliaire 20, le carter 40 et le procédé de lubrification selon l'invention sont ainsi configurés de sorte que le réducteur 10 est toujours lubrifié, quelles que soient les altitudes de vol et les phases de fonctionnement de la turbomachine.

## Revendications

1. Réservoir auxiliaire (20) pour une turbomachine (1) d'aéronef, comportant une forme générale incurvée dont le rayon de courbure est centré sur un axe (Y) destiné à correspondre à un axe longitudinal (X) de la turbomachine (1), ce réservoir (20) comportant une paroi cylindrique ou tronconique radialement externe (210) et trois parois cylindriques ou tronconiques radialement internes (220, 230) et agencées en regard de ladite paroi radialement externe (210), les trois parois radialement internes (220, 230) comportant une paroi médiane (220) et deux parois latérales (230) disposées de chaque côté de la paroi médiane (220), **caractérisé en ce que**
la paroi médiane (220) ayant un rayon de courbure moyen (D1) supérieur aux rayons de courbure moyens (D2) desdites parois latérales (230) de façon à ce que le volume interne du réservoir (20) forme sensiblement un U dont les branches sont formées par des portions latérales de volume (V1) entre les parois latérales (230) et la paroi radiale externe (210) et dont le fond est formé par une portion médiane de volume (V2) entre la paroi médiane (220) et la paroi radiale externe (210).

2. Réservoir auxiliaire (20) selon la revendication précédente, **caractérisé en ce qu'**il comprend une entrée d'huile située sur la paroi médiane (220).

3. Réservoir auxiliaire (20) selon l'une des revendications précédentes, dans lequel les portions latérales de volume (V1) sont reliées à des sorties de gaz.

4. Réservoir auxiliaire (20) selon l'une des revendications précédentes, **caractérisé en ce qu'**il comprend une sortie d'huile reliée par un tuyau (27) à une pompe (30) alimentée par exemple par un moteur électrique.

5. Carter (40) de turbomachine (1), comportant deux parois annulaires coaxiales (41, 42), l'une (41), formant le carter intérieur de la turbomachine (1), s'étendant à l'intérieur de l'autre (42), formant le carter inter-veine de la turbomachine (1), et reliées ensembles par une rangée annulaire de bras (43) destinés à être balayés par un flux de gaz en fonctionnement, l'un (43') au moins de ces bras (43) étant creux et comportant un premier passage (44) interne de récupération d'huile, **caractérisé en ce qu'**il comprend un réservoir auxiliaire (20) selon l'une quelconque des revendications 1 à 4 et un second passage (45) interne de récupération d'huile et d'acheminement de cette huile vers le réservoir auxiliaire (20).

6. Carter (40) selon la revendication précédente, dans lequel lesdits passages (44, 45) de récupération d'huile sont formés dans le carter inter-veine (42) et sont formés par deux canaux séparés par une cloison (46) et agencés côte à côte dans un même plan passant par l'axe de révolution du carter intérieur (41) et du carter inter-veine (42).

7. Carter (40) selon l'une des revendications 5 ou 6, dans lequel le carter inter-veine (42) comprend deux rebords annulaires (42a) radialement externes entre lesquels est monté le réservoir (20).

8. Carter (40) selon l'une des revendications 5 à 7, dans lequel la paroi médiane (220) du réservoir auxiliaire (20) est située au droit dudit bras creux (43') et les parois latérales (230) sont situées au droit d'espaces inter-bras.

9. Turbomachine (1) d'aéronef **caractérisée en ce qu'**elle comprend un carter (40) selon l'une quelconque des revendications 5 à 8, dans lequel l'axe de centrage (Y) du rayon de courbure du réservoir auxiliaire 20 correspond à l'axe longitudinal (X) de la turbomachine (1).

10. Turbomachine (1) d'aéronef selon la revendication précédente, **caractérisée en ce qu'**elle comprend un réducteur (10), un réservoir principal d'huile de lubrification et un circuit principal de lubrification, le réservoir auxiliaire (20) d'huile selon l'une quelconque des revendications 1 à 4, un circuit de lubrification auxiliaire, le réservoir auxiliaire (20) étant relié au réducteur (10) par l'intermédiaire du second passage (45) interne de récupération d'huile, le réservoir principal et le circuit de lubrification principal étant configurés pour lubrifier le réducteur (10) lorsque la turbomachine est active, et le réservoir auxiliaire (20) et le circuit de lubrification auxiliaire étant configurés pour lubrifier le réducteur (10) lorsque la turbomachine n'est pas active.

11. Procédé de lubrification d'un réducteur (10) d'une turbomachine (1) d'aéronef selon la revendication 10, comprenant une étape d'activation de la pompe (30) de façon à ce que de l'huile arrive depuis le réservoir auxiliaire (20) jusqu'au réducteur (10) dès qu'une phase de rotation libre de la soufflante (S) est détectée.

## Patentansprüche

1. Hilfstank (20) für eine Turbomaschine (1) eines Luftfahrzeugs, der eine allgemeine gekrümmte Form aufweist, deren Krümmungsradius auf einer Achse (Y) zentriert ist, die dazu bestimmt ist, einer Längsachse (X) der Turbomaschine (1) zu entsprechen, wobei dieser Tank (20) eine radiale äußere zylindrische oder kegelstumpfförmige Wand (210) und drei radiale innere zylindrische oder kegelstumpfförmige Wände (220, 230) aufweist, die gegenüber der radialen äußeren Wand (210) angeordnet sind, wobei die drei radialen inneren Wände (220, 230) eine mittlere Wand (220) und zwei Seitenwände (230) aufweisen, die auf jeder Seite der mittleren Wand (220) angeordnet sind, **dadurch gekennzeichnet, dass** die mittlere Wand (220) einen durchschnittlichen Krümmungsradius (D1) hat, der größer ist als die durchschnittlichen Krümmungsradien (D2) der Seitenwände (230), sodass das Innenvolumen des Tanks (20) im Wesentlichen ein U bildet, dessen Schenkel durch seitliche Volumenabschnitte (V1) zwischen den Seitenwänden (230) und der radialen äußeren Wand (210) gebildet werden und dessen Boden durch einen mittleren Volumenabschnitt (V2) zwischen der mittleren Wand (220) und der radial äußeren Wand (210) gebildet wird.

2. Hilfstank (20) nach dem vorstehenden Anspruch, **dadurch gekennzeichnet, dass** er einen Öleinlass umfasst, der sich an der mittleren Wand (220) befindet.

3. Hilfstank (20) nach einem der vorstehenden Ansprüche, wobei die seitlichen Volumenabschnitte (V1) mit Gasauslässen verbunden sind.

4. Hilfstank (20) nach einem der vorstehenden Ansprüche, **dadurch gekennzeichnet, dass** er einen Ölauslass umfasst, der über ein Rohr (27) mit einer Pumpe (30) verbunden ist, die zum Beispiel von einem Elektromotor versorgt wird.

5. Gehäuse (40) einer Turbomaschine (1), das zwei koaxiale ringförmige Wände (41, 42) aufweist, wobei die eine (41), die das innere Gehäuse der Turbomaschine (1) bildet, sich in das Innere der anderen (42), die das Zwischenstromgehäuse der Turbomaschine (1) bildet, erstreckt, und die miteinander durch eine ringförmige Reihe von Armen (43) verbunden sind, die dazu bestimmt sind, im Betrieb durch einen Gasstrom umspült zu werden, wobei mindestens der eine (43') dieser Arme (43) hohl ist und einen ersten inneren Durchgang (44) zum Auffangen von Öl aufweist, **dadurch gekennzeichnet, dass** es einen Hilfstank (20) nach einem der Ansprüche 1 bis 4 und einen zweiten inneren Durchgang (45) zum Auffangen von Öl und zum Befördern dieses Öls zum Hilfstank (20) umfasst.

6. Gehäuse (40) nach dem vorstehenden Anspruch, wobei die Durchgänge (44, 45) zum Auffangen von Öl in dem Zwischenstromgehäuse (42) ausgebildet sind und durch zwei Kanäle gebildet sind, die durch eine Trennwand (46) getrennt sind und nebeneinander in einer gleichen Ebene angeordnet sind, die durch die Rotationsachse des inneren Gehäuses (41) und des Zwischenstromgehäuses (42) verläuft.

7. Gehäuse (40) nach einem der Ansprüche 5 oder 6, wobei das Zwischenstromgehäuse (42) zwei radial äußere ringförmige Außenränder (42a) umfasst, zwischen denen der Tank (20) montiert ist.

8. Gehäuse (40) nach einem der Ansprüche 5 bis 7, wobei die mittlere Wand (220) des Hilfstanks (20) rechts von dem hohlen Arm (43') angeordnet ist und die Seitenwände (230) rechts von den Armzwischenräumen angeordnet sind.

9. Turbomaschine (1) eines Luftfahrzeugs, **dadurch gekennzeichnet, dass** sie ein Gehäuse (40) nach einem der Ansprüche 5 bis 8 umfasst, wobei die Zentrierachse (Y) des Krümmungsradius des Hilfstanks 20 der Längsachse (X) der Turbomaschine (1) entspricht.

10. Turbomaschine (1) eines Luftfahrzeugs nach dem vorstehenden Anspruch, **dadurch gekennzeichnet, dass** sie ein Untersetzungsgetriebe (10), einen Hauptschmieröltank und einen Hauptschmierkreislauf, den Hilfsöltank (20) nach einem der Ansprüche 1 bis 4, einen Hilfsschmierkreislauf umfasst, wobei der Hilfstank (20) mittels des zweiten inneren Durchgangs (45) Auffangen von Öl mit dem Untersetzungsgetriebe (10) verbunden ist, wobei der Haupttank und der Hauptschmierkreislauf so konfiguriert sind, dass sie das Untersetzungsgetriebe (10) schmieren, wenn die Turbomaschine aktiv ist, und wobei der Hilfstank (20) und der Hilfsschmierkreislauf so konfiguriert sind, dass sie das Untersetzungsgetriebe (10) schmieren, wenn die Turbomaschine nicht aktiv ist.

11. Verfahren zur Schmierung eines Untersetzungsgetriebes (10) einer Turbomaschine (1) eines Luftfahrzeugs nach Anspruch 10, umfassend einen Schritt zur Aktivierung der Pumpe (30), sodass das Öl aus dem Hilfstank (20) zum Untersetzungsgetriebe (10) gelangt, sobald eine Phase der freien Drehung des Gebläses (S) erfasst wird.

## Claims

1. An auxiliary tank (20) for an aircraft turbomachine (1), comprising a curved general shape whose radius of curvature is centred on an axis (Y) intended to correspond to a longitudinal axis (X) of the turbomachine (1), this tank (20) comprising a cylindrical or frustoconical radially outer wall (210) and three cylindrical or frustoconical radially inner walls (220, 230) arranged opposite said radially outer wall (210), the three radially inner walls (220, 230) comprising a middle wall (220) and two side walls (230) arranged on either side of the middle wall (220), **characterised in that** the middle wall (220) having a mean radius of curvature (D1) greater than the mean radius of curvature (D2) of said side walls (230) so that the inner volume of the tank (20) substantially forms a U-shape, the branches of which are formed by lateral volume portions (V1) between the side walls (230) and the radially outer wall (210) and the base of which is formed by a middle volume portion (V2) between the middle wall (220) and the radially outer wall (210).

2. The auxiliary tank (20) according to the preceding claim, **characterised in that** it comprises an oil inlet located on the middle wall (220).

3. The auxiliary tank (20) according to one of the preceding claims, wherein the lateral volume portions (V1) are connected to gas outlets.

4. The auxiliary tank (20) according to one of the preceding claims, **characterised in that** it comprises an oil outlet connected by a hose (27) to a pump (30) powered for example by an electric motor.

5. A casing (40) for a turbomachine (1), comprising two coaxial annular walls (41, 42), one (41) forming the inner casing of the turbomachine (1), extending inside the other (42), forming the inter-duct casing of the turbomachine (1), and connected together by an annular row of arms (43) intended to be swept by a flow of gas during operation, at least one (43') of these arms (43) being hollow and comprising a first inner passage (44) for oil recovery, **characterised in that** it comprises a second inner passage (45) for oil recovery and for conveying this oil to an auxiliary tank (20) according to any one of claims 1 to 4.

6. The casing (40) according to the preceding claim, wherein said passages (44, 45) for oil recovery are formed in the inter-duct casing (42) and are formed by two channels separated by a partition (46) and arranged side by side in the same plane passing through the axis of revolution of the inner casing (41) and of the inter-duct casing (42).

7. The casing (40) according to one of claims 5 or 6, wherein the inter-duct casing (42) comprises two radially outer annular rims (42a) between which the tank (20) is mounted.

8. The casing (40) according to one of claims 5 to 7, wherein the middle wall (220) of the auxiliary tank (20) is located perpendicularly to said hollow arm (43') and the side walls (230) are located perpendicularly to inter-arm spaces.

9. An aircraft turbomachine (1) **characterised in that** it comprises a casing (40) according to any one of claims 5 to 8, in which the centring axis (Y) of the radius of curvature of the auxiliary tank (20) corresponds to the longitudinal axis (X) of the turbomachine (1).

10. The aircraft turbomachine (1) according to the preceding claim, **characterised in that** it comprises a reducer (10), a main lubrication oil tank and a main lubrication circuit, an auxiliary oil tank (20), an auxiliary lubrication circuit, the auxiliary tank (20) being connected to the reducer (10) via the second inner passage (45) of oil recovery, the main tank and the main lubrication circuit being configured to lubricate the reducer (10) when the turbomachine is active, and the auxiliary tank (20) and the auxiliary lubrication circuit being configured to lubricate the reducer (10) when the turbomachine is not active.

11. A method of lubricating a reducer (10) of an aircraft turbomachine (1) according to claim 10, comprising a step of activating the pump (30) so that oil arrives from the auxiliary tank (20) to the reducer (10) as soon as a phase of free rotation of the fan (S) is detected.
